# EUROPÄISCHE PATENTSCHRIFT

(11) **EP 1 108 570 B1**
(45) Veröffentlichungstag und Bekanntmachung des Hinweises auf die Patenterteilung: **19.09.2007**
(21) Anmeldenummer: 00125539.7
(22) Anmeldetag: 22.11.2000
(51) Int. Cl.: B60G 17/052, B60G 17/015, B60G 11/27, B62D 61/12

(54) **Luftgefedertes Nutzfahrzeug mit einer angetriebenen Hinterachse und einer dieser beigeordneten Vor- oder Nachlaufachse**
Commercial vehicle with pneumatic suspension having a twin axle before or after the rear drive axle
Véhicule industriel à suspension à ressorts pneumatiques avec un essieu suiveur devant ou derrière de l'essieu moteur arrière

(30) Priorität: 14.12.1999 AT 209999
(43) Veröffentlichungstag der Anmeldung: 20.06.2001
(73) Patentinhaber: MAN Nutzfahrzeuge Österreich AG, 1230 Wien (AT)
(72) Erfinder: Hörmansdorfer, Otmar, 1220 Wien (AT); Gutmann, Karl, 1090 Wien (AT)

(56) Entgegenhaltungen:
- EP-A- 0 170 794
- EP-A- 0 240 661
- EP-A- 0 301 225
- EP-A- 0 411 352
- WO-A-00/27688

## Beschreibung

Die Erfindung betrifft ein Nutzfahrzeug, insbesondere Lastkraftwagen, mit einer luftgefederten, angetriebenen Hinterachse, einer dieser beigeordneten Vor- oder Nachlaufachse sowie je Achse und Achsseite einem Luftfederkreis mit wenigstens einem Luftfederbalg.

Die Erfindung geht von folgendem Stand der Technik aus. Bei Nutzfahrzeugen, insbesondere Lastkraftwagen, der gattungsgemäßen Art kommen Luftfederungssysteme zur Anwendung, bei denen das zwischen angetriebener Hinterachse und Vor- bzw. Nachlaufachse gewünschte Achslastverhältnis durch unterschiedliche Luftfederbalg-Größen hergestellt ist. Dieses Achslastverhältnis ist durch die bauliche Größe der Luftfederbälge vorgegeben und demzufolge nicht veränderbar. Dieser Sachverhalt bewirkt, daß die Luftfederung des Nutzfahrzeuges entweder nur nach gesetzlichen oder technischen Kriterien ausgelegt werden konnte. Das nachfolgend geschilderte Praxisbeispiel verdeutlicht die Problematik:

Ein solches gattungsgemäßes Luftfedungssystem ist beispielsweise aus der EP 0 301 225 A bekannt.

Die gesetzlich zulässige Achslast der angetriebenen Hinterachse beträgt z. B. 11,5 Tonnen. Die technisch zulässige Achslast dieser angetriebenen Hinterachse dagegen beträgt 13 Tonnen. Bei der Vor- bzw. Nachlaufachse ist die gesetzlich zulässige Einzelachslast in der Regel identisch mit der technisch zulässigen Einzelachslast von z. B. 7,5 Tonnen.

Eine Auslegung der Luftfederung nach den technisch zulässigen Achslasten hat bei der Fahrzeugzulassung den Nachteil, daß das feste Verhältnis von z. B. 13 Tonnen Hinterachslast / 7,5 Tonnen Vor- bzw. Nachlaufachslast = 1,73 auf die mit 11,5 Tonnen gesetzlich zulässige Höchstlast bezogen werden muß. Dadurch ergibt sich aufgrund des festen Achslastverhältnisses von 1,73 nur eine Vor- bzw. Nachlaufachslast von 6,65 Tonnen. Dieser Verlust von knapp 1 Tonne im Hinterachsbereich bewirkt sehr oft, daß Fahrgestelle von Lastkraftwagen, die grundsätzlich z. B. mit 26 Tonnen Gesamtgewicht zulassungsfähig wären, nur mit 25 Tonnen genehmigt werden können. Der Markt fordert aber eine höchstmögliche Gesamtgewichtszulassung und außerdem die Überlastfähigkeit der Hinterachs-Luftfederung z. B. zur Bereitstellung einer Anfahrhilfsfunktion, bei der die Luftfederung der Vor- bzw. Nachlaufachse teilentlastet ist und die höher belastete Hinterachse dann eine bessere Traktion hat.

Eine Auslegung der Luftfederung nach den gesetzlich zulässigen Achslasten dagegen hat im praktischen Fahrbetrieb den Nachteil, daß höhere technisch zulässige Achslasten an der Hinterachse von z. B. 13 Tonnen kaum und die gesetzlich zulässige Anfahrhilfe-Auflastung bis 15 Tonnen überhaupt nicht darstellbar sind.

Es ist daher Aufgabe der Erfindung, ein Nutzfahrzeug der gattungsgemäßen Art so auszustatten, daß dem vorgeschilderten Problem abgeholfen wird.

Diese Aufgabe ist erfindungsgemäß entsprechend den kennzeichnenden Merkmalen des Anspruchs 1 dadurch gelöst, daß die Größe der je Achsseite beiden Luftfederbälge der Hinterachse und die Größe der Luftfederbälge der Vor- bzw. Nachlaufachse entsprechend der jeweils technisch zulässigen Achslast von beispielsweise 13 Tonnen bzw. 7,5 Tonnen festgelegt ist, sich somit ein technisches Achslastverhältnis von 13 Tonnen / 7,5 Tonnen = 1,73 ergibt, daß ferner eine Vorrichtung zum automatischen Umschalten zwischen gesetzlichem und technischem Achslastverhältnis vorgesehen ist, wobei die gesetzlich zulässige Achslast der Hinterachse beispielsweise 11,5 Tonnen und die gesetzlich zulässige Achslast der Nachlaufachse 11,5 Tonnen / 1,73 = 6,65 Tonnen beträgt und die besagte Vorrichtung folgende Teile aufweist, nämlich
- zwei jeweils zwischen einer Volldurchlaßstellung und einer Druckreduzierstellung umschaltbare Druckverhältnisventile - je Luftfederkreis der Hinterachse eines -, die beide bis zum Erreichen eines Beladungszustandes, der der gesetzlich zulässigen Achslast der Hinterachse von beispielsweise 11,5 Tonnen entspricht, in Druckreduzierstellung geschaltet sind und somit eine Reduzierung des Luftdruckes von z. B. 7,5 bar auf 6,5 bar in den Hinterachs-Luftfederbälgen im erforderlichen Verhältnis von z. B. 1,15 in Bezug auf den Luftdruck von beispielsweise 7,5 bar in den Luftfederbälgen der Vor- bzw. Nachlaufachse zulassen, und
- einen Drucksensor, der die Achslast der Hinterachse über den Druck wenigstens eines von deren beiden Luftfederkreisen erfaßt und bei Erreichen der gesetzlich zulässigen Hinterachslast die Umschaltung der beiden Druckverhältnisventile in Volldurchlaßstellung initiiert, so daß sich anschließend das technische Achslastverhältnis aufgrund gleicher Drücke von beispielsweise 7,5 bar in allen Luftfederbälgen der Hinterachse und Vor- bzw. Nachlaufachse einstellt.

Die Erfindung gestattet mithin eine automatische Umschaltung zwischen gesetzlichem und technischem Achslastverhältnis nach bestimmten Kriterien. Die diesbezügliche Schaltung ist einfach und kostengünstig zu realisieren und bringt in der Praxis einen erheblichen Nutzen.

Vorteilhafte Ausgestaltungen und Details der erfindungsgemäßen Lösung sind in den Unteransprüchen angegeben, auf deren wörtliche Zitierung hier verzichtet ist, da deren Merkmale alle in der Figurenbeschreibung wiedergegeben sind.

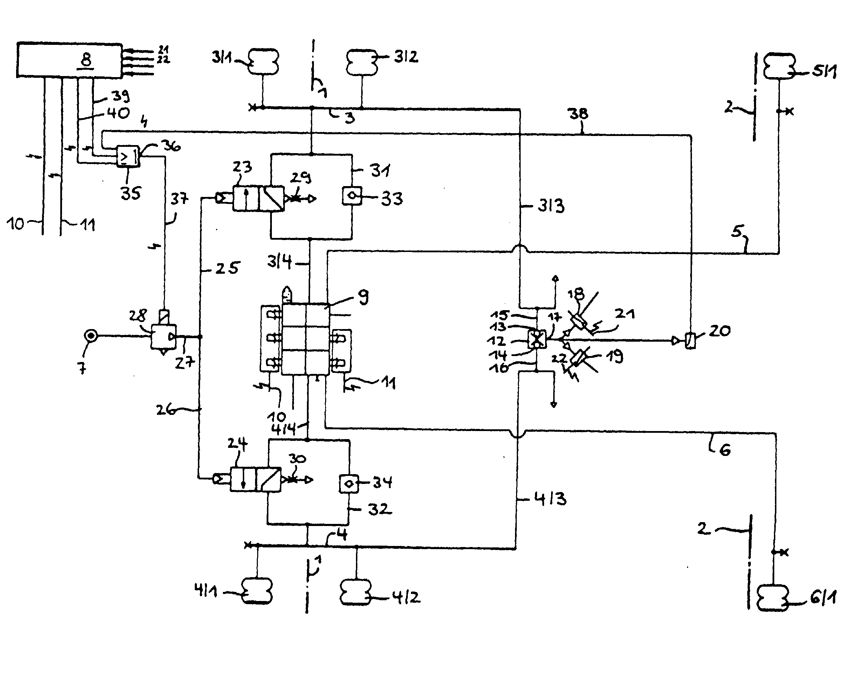

Nachfolgend ist die erfindungsgemäße Lösung anhand eines in der Zeichnung dargestellten Ausführungsbeispiels näher erläutert.

In der Zeichnung ist mit der strich-punktierten Linie 1 die angetriebene Hinterachse und mit der strich-punktierten Linie 2 eine der Hinterachse 1 beigeordnete Vor- oder Nachlaufachse eines Nutzfahrzeuges, im Beispiel 3-achsigen Lastkraftwagens angedeutet. Je Achse 1, 2 und Achsseite ist ein eigener Luftfederkreis vorgesehen. Dabei ist der linksseitige Luftfederkreis der Hinterachse 1 mit 3, der rechtsseitige Luftfederkreis der Hinterachse 1 mit 4, der linksseitige Luftfederkreis der Vor- bzw. Nachlaufachse 2 mit 5 und der rechtsseitige Luftfederkreis der Vor- bzw. Nachlaufachse 2 mit 6 bezeichnet. An jedem der beiden Luftfederkreise 3, 4 der Hinterachse 1 sind jeweils zwei Luftfederbälge 3/1, 3/2 bzw. 4/1, 4/2 angeschlossen. An jedem Luftfederkreis 5 bzw. 6 der Vor- bzw. Nachlaufachse 2 dagegen ist jeweils nur ein Luftfederbalg 5/1 bzw. 6/1 angeschlossen. Mit 7 ist eine Druckluftquelle, mit 8 eine elektronische Steuereinheit für die elektronisch gesteuerte Druckluftversorgung im Fahrzeug und mit 9 ein Magnetventilblock bezeichnet. Die Magnetventile des Magnetventilblockes 9 sind durch Steuerbefehle der Steuereinheit 8 über Signalleitungen 10, 11 schaltbar, wodurch die Druckluftversorgung und -regelung in den ausgangsseitig angeschlossenen Luftfederkreissen 3, 4, 5, 6 bewerkstellbar ist. Mit 12 ist ein Doppelabsperrventil bezeichnet, dessen beide Eingänge 13 bzw. 14 jeweils über eine Anschlußleitung 15 bzw. 16 mit einem Teilzweig 3/3 des linken Luftfederkreises 3 bzw. 4/3 des rechten Luftfederkreises 4 in Verbindung stehen und so immer den in den beiden Luftfederkreisen 3, 4 aktuellen Luftdruck eingespeist bekommen. Am Ausgang 17 des Doppelabsperrventils 12 erscheint der jeweils höhere der beiden eingespeisten Druckwerte, welcher im dargestellten Beispiel von drei Drucksensoren 18, 19, 20 erfaßt und wie folgt angegeben weiterbenutzt wird. Der Drucksensor 18 ist vorgesehen, weil die Vor- bzw. Nachlaufachse 2 im dargestellten Beispiel liftbar ist, also vollkommen außer Kontakt mit der Fahrbahn in eine angehobene Position bringbar ist. Der Drucksensor 18 dient dabei zur Erfassung eines Überlastzustandes an der Hinterachse 1 und gibt bei Eintreten dieses Zustandes über Signalleitung 21 ein entsprechendes Signal an die Steuereinheit 8 ab, welche dann ein Absenken der vorher gelifteten Vor- bzw. Nachlaufachse 2 initiiert. Der Drucksensor 19 dagegen ist vorgesehen, weil im dargestellten Beispiel auch eine Teilentlastung der Luftfederbälge 5/1, 6/1 der sich in abgesenkter Mittragstellung befindlichen Vor- bzw. Nachlaufachse 2 möglich ist, mit dem Ziel, die Mittragfunktion der Vor- bzw. Nachlaufachse 2 zu reduzieren und die Achslast an der Hinterachse 1 zur Traktionsverbesserung zu erhöhen. Der vom Drucksensor 19 erfaßte Druckwert wird über die Signalleitung 22 der Steuereinheit 8 zugeführt und von dieser bei einem Anfahrvorgang des Fahrzeugs - entweder automatisch oder auf einen signalmäßig vom Fahrer initiierten Befehl hin - in ein Signal für eine Teilentlastung der Luftfederbälge 5/1, 6/1 in den Luftfederkreisen 5, 6 der Vor- bzw. Nachlaufachse 2 umgesetzt. Der Drucksensor 20 ist Bestandteil der erfindungsgemäßen Ausstattung des Fahrzeugs und nachfolgend zusammen mit dieser näher erläutert.

Ein erstes Merkmal der Erfindung besteht darin, daß die Größe der je Achsseite beiden Luftfederbälge 3/1, 3/2; 4/1, 4/2 der Hinterachse 1 entsprechend der technisch zulässigen Achslast von beispielsweise 13 Tonnen festgelegt ist, was bei diesem Beispiel Luftfederbälge 3/1, 3/2: 4/1, 4/2 mit jeweils einem Durchmesser von 190 mm bedeutet. Ein zweites Merkmal der Erfindung besteht darin, daß die Größe der Luftfederbälge 5/1, 6/1 der Vor- bzw. Nachlaufachse 2 ebenfalls entsprechend der technisch zulässigen Achslast von beispielsweise 7,5 Tonnen festgelegt ist, was bei diesem Beispiel Luftfederbälge 5/1, 6/1 mit einem Durchmesser von 210 mm bedeutet. Aufgrund dieser Festlegungen ergibt sich somit ein technisches Achslastverhältnis zwischen Hinterachse 1 und Vor- bzw. Nachlaufachse 2 von 13 Tonnen / 7,5 Tonnen = 1,73.

Gemäß einem weiteren Merkmal der Erfindung ist eine Vorrichtung vorgesehen, die ein automatisches Umschalten zwischen gesetzlichem und technischem Achslastverhältnis ermöglicht. Dabei betragen im vorliegenden Beispiel die gesetzlich zulässige Achslast der Hinterachse 11,5 Tonnen und die gesetzlich zulässige Achslast der Vor- bzw. Nachlaufachse 11,5 Tonnen / 1,73 = 6,65 Tonnen.

Die besagte Vorrichtung umfaßt erfindungsgemäß zwei jeweils zwischen einer Volldurchlaßstellung und einer Druckreduzierstellung umschaltbare Druckverhältnisventile 23, 24 - je Luftfederkreis 3, 4 der Hinterachse 1 eines - und den Drucksensor 20. Die beiden Druckverhältnisventile 23, 24 sind jeweils in einen Druckluftregelzweig 3/4 des linken Luftfederkreises 3 bzw. 4/4 des rechten Luftfederkreises 4 eingebaut, der zwischen dem Magnetventilblock 9 und den beiden Luftfederbälgen 3/1, 3/2 bzw. 4/1, 4/2 je Achsseite der Hinterachse 1 verläuft.

Erfindungsgemäß sind beide Druckverhältnisventile 23, 24 bis zum Erreichen eines Beladungszustandes des Fahrzeugs, der der gesetzlich zulässigen Achslast der Hinterachse 1 von im Beispiel 11,5 Tonnen entspricht, in ihre Druckreduzierstellung geschaltet (diese ist in der Zeichnung wirksam dargestellt), wodurch sie eine Druckreduzierung von im Beispiel 7,5 bar auf 6,5 bar in den Hinterachs-Luftfederbälgen 3/1, 3/2 bzw. 4/1, 4/2 im erforderlichen Verhältnis von 1,15 in Bezug auf den in den Luftfederbälgen 5/1, 6/1 der Vor- bzw. Nachlaufachse 2 herrschenden Luftdruck von im Beispiel 7,5 bar zulassen.

Der die Achslast der Hinterachse 1 über den Druck wenigstens eines von deren beiden Luftfederkreisen 3, 4 erfassende Drucksensor 20 initiiert erfindungsgemäß bei Erreichen der vorgegebenen gesetzlich zulässigen Hinterachslast eine Umschaltung der beiden Druckverhältnisventile 23, 24 in deren Volldurchlaßstellung, so daß sich anschließend das technische Achslastverhältnis zwischen Hinterachslast und Vor- bzw. Nachlaufachslast aufgrund gleicher Drücke von im Beispiel 7,5 bar in allen Luftfederbälgen 3/1, 3/2, 4/1, 4/2, 5/1, 6/1 an Hinterachse 1 und Vor- und Nachlaufachse 2 einstellt.

Die beiden Druckverhältnisventile 23, 24 sind vorzugsweise mittels eines Druckluftsignales umschaltbar. Hierfür sind diese im dargestellten Beispiel mit ihren Schalteingängen über jeweils eine Druckluftsteuerleitung 25, 26 am Ausgang 27 eines gemeinsamen Druckluftschaltventils 28 angeschlossen. Dieses ist bei Erreichen der gesetzlich zulässigen Hinterachslast durch das diesbezüglich vom Drucksensor 20 initiierte Signal aktivierbar und läßt dann das Zuführen von Schaltluft von der Druckluftquelle 7 her über die Steuerleitungen 25, 26 zu den beiden Druckverhältnisventilen 23, 24 zu, wodurch diese synchron von ihrer vorherigen Druckreduzierstellung in ihre Volldurchlaßstellung umgeschaltet werden, in der dann eine durchgängige Verbindung in jedem Druckluftregelzweig 3/4 bzw. 4/4 vom Magnetventilblock 9 zu den jeweils beiden Luftfederbälgen 3/1, 3/2 bzw. 4/1, 4/2 je Achsseite der Hinterachse 1 gegeben ist.

Jedes Druckverhältnisventil 23, 24 weist eine Abluftdrossel 29 bzw. 30 auf, die in seiner Druckreduzierstellung für eine Minimierung des Druckluftverbrauches sorgt. Außerdem ist jedes Druckverhältnisventil 23, 24 von einem Bypasszweig 31 bzw. 32 umgangen, in den ein Rückschlagventil 33 bzw. 34 so eingebaut ist, daß Luft im jeweiligen Druckluftregelzweig 3/4 bzw. 4/4 nur von den an diesem angeschlossenen Luftfederbälgen 3/1. 3/2 bzw. 4/1. 4/2 her zum Magnetventilblock 9 hin durchgelassen wird.

Im dargestellten Beispiel ist außerdem ein elektronisches ODER-Gatter 35 vorgesehen, das drei ODER-Signaleingänge und einen Ausgang 36 aufweist. Letzterer ist über eine Steuer leitung 37 mit dem Schaltorgan des Druckluftschaltventils 28 verbunden. Der erste ODER-Signaleingang des ODER-Gatters 35 ist über eine Steuerleitung 38 mit dem Drucksensor 20 verbunden. Der zweite ODER-Signaleingang des ODER-Gatters 35 ist mit der Steuereinheit 8 über eine Steuerleitung 39 verbunden, über die dann, wenn sich die Vor- bzw. Nachlaufachse 2 in Liftposition befindet, ein für diesen Zustand repräsentatives Signal zum ODER-Gatter 35 geleitet wird. Der dritte ODER-Signaleingang des ODER-Gatters 35 erhält von der Steuereinheit 8 her über eine Steuerleitung 40 ein Signal übertragen, das dann ausgegeben wird, wenn eine Teilentlastung der Luftfederbälge 5/1, 6/1 der Vor- bzw. Nachlaufachse 2 erfolgt, um eine Achslasterhöhung an der Hinterachse 1 für eine Traktionsverbesserung derselben in Anfahrfall zu bewirken. Aufgrund dieser Anschlußverhältnisse am ODER-Gatter 35 ergibt sich, daß bei Anliegen eines Signales an einem von dessen drei ODER-Signaleingängen das Druckluftschaltventil 28 ein Schaltsignal erhält, also aktiviert wird und damit die Druckverhältnisventile 23, 24 in ihre Volldurchlaßstellung umgeschaltet werden. Letzteres bewirkt die weiter vorne bereits geschilderte Druckluftbeaufschlagung der Luftfederbälge 3/1, 3/2, 4/1, 4/2 in dem Sinne, daß sich das technische Achslastverhältnis oder eine zulässige Überlast an der Hinterachse 1 einstellt.

## Patentansprüche

1. Nutzfahrzeug, insbesondere Lastkraftwagen, mit einer luftgefederten, angetriebenen Hinterachse, einer dieser beigeordneten luftgefederten Vor- oder Nachlaufachse sowie je Achse und Achsseite einem Luftfederkreis mit je wenigstens einem Luftfederbalg, **dadurch gekennzeichnet, daß** die Größe der je Achsseite beiden Luftfederbälge (3/1, 3/2; 4/1, 4/2) der Hinterachse (1) und die Größe der Luftfederbälge (5/1, 6/1) der Vor- bzw. Nachlaufachse (2) entsprechend der jeweils technisch zulässigen Achslast von beispielsweise 13 Tonnen bzw. 7,5 Tonnen festgelegt ist, sich somit ein technisches Achslastverhältnis von 13 Tonnen / 7,5 Tonnen = 1,73 ergibt, daß ferner eine Vorrichtung zum automatischen Umschalten zwischen gesetzlichem und technischem Achslastverhältnis vorgesehen ist, wobei die gesetzlich zulässige Achslast der Hinterachse (1) beispielsweise 11,5 Tonnen und die gesetzlich zulässige Achslast der Nachlaufachse 11,5 Tonnen / 1,73 = 6,65 Tonnen beträgt und die besagte Vorrichtung folgende Teile aufweist, nämlich
- zwei jeweils zwischen einer Volldurchlaßstellung und einer Druckreduzierstellung umschaltbare Druckverhältnisventile (23, 24) - je Luftfederkreis (3, 4) der Hinterachse (1) eines -, die beide bis zum Erreichen eines Beladungszustandes, der der gesetzlich zulässigen Achslast der Hinterachse (1) von beispielsweise 11,5 Tonnen entspricht, in Druckreduzierstellung geschaltet sind und somit eine Reduzierung des Luftdruckes von z. B. 7,5 bar auf 6,5 bar in den Hinterachs-Luftfederbälgen (3/1, 3/2 bzw. 4/1, 4/2) im erforderlichen Verhältnis von z. B. 1,15 in Bezug auf den Luftdruck von beispielsweise 7,5 bar in den Luftfederbälgen (5/1, 6/1) der Vor- bzw. Nachlaufachse (2) zulassen, und
- einen Drucksensor (20), der die Achslast der Hinterachse (1) über den Druck wenigstens eines von deren beiden Luftfederkreisen (3, 4) erfaßt und bei Erreichen der gesetzlich zulässigen Hinterachslast die Umschaltung der beiden Druckverhältnisventile (23, 24) in Volldurchlaßstellung initiiert, so daß sich anschließend das technische Achslastverhältnis aufgrund gleicher Drücke von beispielsweise 7,5 bar in allen Luftfederbälgen (3/1, 312, 4/1, 4/2, 5/1, 6/1) der Hinterachse (1) und Vor- bzw. Nachlaufachse (2) einstellt.

2. Nutzfahrzeug nach Anspruch 1, **dadurch gekennzeichnet, daß** jedes der beiden Druckverhältnisventile (23, 24)
- in einen Druckluftregelzweig (3/4; 4/4) des linken und rechten Luftfederkreises (3, 4) eingebaut ist, der zwischen einem Magnetventilblock (9) und den beiden Luftfederbälgen (3/1, 3/2 bzw. 4/1, 4/2) je Achsseite der Hinterachse (1) verläuft, und
- mittels eines Druckluftsignales umschaltbar ist,
daß beide Druckverhältnisventile (23, 24) mit ihren Schalteingängen über jeweils eine Druckluftsteuerleitung (25, 26) am Ausgang (27) eines gemeinsamen Druckluftschaltventils (28) angeschlossen sind, das bei Anliegen eines vom Drucksensor (20) bei Erreichen der gesetzlich zulässigen Hinterachslast initiierten Signals aktivierbar ist und dann das Zuführen von Schaltluft zu den beiden Druckverhältnisventilen (23, 24) für deren synchrone Umschaltung in Volldurchlaßstellung zuläßt, in der dann eine luftdurchgängige Verbindung in jedem Druckluftregelzweig (3/4 bzw. 4/4) vom Magnetventilblock (9) zu den jeweils beiden Luftfederbälgen (3/1, 3/2 bzw. 4/1, 4/2) je Achsseite der Hinterachse (1) hin gegeben ist.

3. Nutzfahrzeug nach Anspruch 2, **dadurch gekennzeichnet, daß** jedes Druckverhältnisventil (23, 24) eine für eine Minimierung des Druckluftverbrauchs in seiner Druckreduzierstellung sorgende Abluftdrossel (29 bzw. 30) aufweist.

4. Nutzfahrzeug nach Anspruch 2, **dadurch gekennzeichnet, daß** jedes Druckverhältnisventil (23, 24) von einem Bypasszweig (31 bzw. 32) umgangen ist, in den ein Rückschlagventil (33 bzw. 34) eingebaut ist, das Luft im jeweiligen Druckluftregelzweig (3/4; 4/4) nur von den an diesem angeschlossenen Luftfederbälgen (3/1, 3/2 bzw. 4/1, 4/2) der Hinterachse (1) her zum Magnetventilblock (9) hin durchläßt.

5. Nutzfahrzeug nach Anspruch 1, **dadurch gekennzeichnet, daß** der Drucksensor (20) am gemeinsamen Ausgang (17) eines Doppelabsperrventiles (12) angeschlossen ist, dessen beide Eingänge (13, 14) jeweils über eine Anschlußleitung (15, 16) mit dem linken bzw. rechten Luftfederkreis (3 bzw. 4) der Hinterachse (1) in Verbindung stehen.

6. Nutzfahrzeug nach Anspruch 2, **dadurch gekennzeichnet, daß** in dem Fall, wenn die Vor- oder Nachlaufachse (2) liftbar ist und/oder die Luftfederbälge (5/1, 6/1) der sich in abgesenkter Mittragstellung befindlichen Vor- bzw. Nachlaufachse (2) für eine Verbesserung der Traktion der angetriebenen Hinterachse (1) beim Anfahren teilentlastbar sind durch entsprechende Steuerbefehle der elektronischen Steuereinheit (8), ein elektronisches ODER-Gatter (35) vorgesehen ist, das drei ODER-Signaleingänge und einen Ausgang (36) aufweist, wobei
- der Ausgang (36) über eine Steuerleitung (37) mit dem Schaltorgan des Druckluftschaltventils (28),
- der erste ODER-Signaleingang über eine Steuerleitung (38) mit dem Drucksensor (20),
- der zweite ODER-Signaleingang über eine die Liftstellung der Vor- bzw. Nachlaufachse (2) signalisierende Steuerleitung (39) mit der Steuereinheit (8), und
- der dritte ODER-Signaleingang über eine die Teil-Entlastung der Luftfederbälge (5/1, 6/1) der Vor- bzw. Nachlaufachse (2) im Anfahrfall signalisierende Steuerleitung (40) ebenfalls mit der Steuereinheit (8)
verbunden ist, so daß bei Anliegen eines Signals an einem der drei ODER-Signaleingänge das Druckluftschaltventil (28) ein Signal erhält, durch dieses aktivierbar ist und dann die Druckverhältnisventile (23, 24) in ihre Volldurchlaßstellung umschaltbar sind.

## Claims

1. Commercial vehicle, particularly a truck, with an air-sprung, driven rear axle, a leading or trailing axle arranged with said rear axle and an air-spring circuit for each axle and axle side, each with at least one air bellows, **characterised in that** the size of the two air bellows (3/1, 3/2; 4/1, 4/2) on each side of the rear axle (1) and the size of the air bellows (5/1, 6/1) on the leading or trailing axle (2) is determined according to the respective technically permissible axle load of, for example, 13 tonnes and 7.5 tonnes respectively, which results in a technical axle load ratio of 13 tonnes / 7.5 tonnes = 1.73, that in addition a device for automatic changeover between statutory and technical axle load ratio is provided, whereby the legally permissible axle load of the rear axle (1) is eg 11.5 tonnes and the legally permissible axle load of the trailing axle is 11.5 tonnes / 1.73 = 6.65 tonnes and that said device has the following parts, namely
• two proportional pressure valves (23, 24) - one for each air-spring circuit (3, 4) for the rear axle (1) -, each of which can be switched between a full passage position and passage reducing position and are both switched to pressure reducing position until the load condition which corresponds to the legally permissible axle load of the rear axle (1) is reached and, as a result, permits a reduction of the air pressure from eg 7.5 bar to 6.5 bar in the rear-axle air bellows (3/1, 3/2 and 4/1, 4/2) in the required ratio of eg 1.15 bar in respect of the air pressure of eg 7.5 bar in the air bellows (5/1, 6/1) on the leading or trailing axle (2) and
• a pressure sensor (20) which records the axle load of the rear axle (1) via the pressure of at least one of the two air-spring circuits (3, 4) and, upon the legally permissible rear-axle load's being reached, initiates the changeover of the two proportional pressure valves (23, 24) to full passage position so that afterwards the technical axle load ratio is established because of identical pressures of eg 7.5 bar in all air bellows (3/1, 3/2, 4/1, 4/2, 5/1, 6/1) on the rear axle (1) and leading or trailing axle (2).

2. Commercial vehicle according to Claim 1, **characterised in that** each of the two pressure reducing valves (23, 24)
• is installed in a compressed-air control branch (3/4; 4/4) of the left- and right-hand air-spring circuit (3, 4) extending between a solenoid valve block (9) and the two air bellows (3/1, 3/2 and 4/1, 4/2) on each side of the rear axle (1) and
• can be changed over by means of a compressed-air signal,
that each of the two proportional pressure valves (23, 24) with their switching inputs is connected via a compressed-air control line (25, 26) to the output (27) of a common compressed-air on/off valve (28) which can be activated if a signal initiated by the pressure sensor (20) upon the legally permissible rear-axle load's being reached is present and then permits the supply of switching air to the two proportional pressure valves (23, 24) for their synchronous changeover to full passage position in which a connection, allowing the passage of air, is provided in each compressed-air control branch (3/4; 4/4) from the solenoid valve block (9) to each pair of air bellows (3/1, 3/2 and 4/1, 4/2) on each side of the rear axle (1).

3. Commercial vehicle according to Claim 2, **characterised in that** each proportional pressure valve (23, 24) features a waste air throttle (29, 30) in charge of minimising the consumption of compressed air when said proportional pressure valve (23, 24) is in the pressure-reducing position.

4. Commercial vehicle according to Claim 2, **characterised in that** each proportional pressure valve (23, 24) is bypassed by a bypass branch (31, 32) in which a check valve (33, 34) is installed which lets air in the respective compressed-air control branch (3/4; 4/4) pass only from the air bellows (3/1, 3/2 and 4/1, 4/2) connected to the respective compressed-air control branch (3/4; 4/4) on the rear axle (1) towards the solenoid valve block (9).

5. Commercial vehicle according to Claim 1, **characterised in that** the pressure sensor (20) is connected to the common output (17) of a dual shut-off valve (12) whose two inputs (13, 14) are each connected via a connecting line (15, 16) to the left- or right-hand air-spring circuit (3, 4) on the rear axle (1).

6. Commercial vehicle according to Claim 2, **characterised in that** if the leading or trailing axle (2) can be lifted and/or the air bellows (5/1, 6/1) on the leading or trailing axle (2) in the lowered load-carrying position can be partially relieved of load by corresponding control commands from the electronic control unit (8) for improving the traction of the driven rear axle (1) while the vehicle is moving off, an electronic OR gate (35) with three OR signal inputs and one output (36) is provided, whereby
• the output (36) is connected via a control line (37) with the switching organ of the compressed-air valve (28),
• the first OR signal input is connected via a control line (38) with the pressure sensor (20),
• the second OR signal input is connected with the control unit (8) via a control line (39) signalling the lift position of the leading or trailing axle (2), and
• the third OR signal input is also connected with the control unit (8) via a control line (40) signalling the partial relief of the air bellows (5/1, 6/1) on the leading or trailing axle (2) when the vehicle is moving off,
so that if a signal is present at one of the three OR signal inputs, the compressed-air switching valve (28) receives a signal, can be activated by said signal and the proportional pressure valves (23, 24) can be switched over to their full passage position.

## Revendications

1. Véhicule industriel, en particulier camion, avec un pont arrière moteur à suspension pneumatique, un essieu poussé ou traîné à suspension pneumatique adjoint à celui-ci ainsi que, pour chaque essieu et côté d'essieu, un circuit pour suspension pneumatique avec au moins un coussin pneumatique à chaque fois, **caractérisé en ce que** la taille des coussins pneumatiques montés de chaque côté d'essieu (3/1, 3/2 ; 4/1, 4/2) du pont arrière (1) et la taille des coussins pneumatiques (5/1, 5/2) de l'essieu poussé ou traîné (2) sont déterminées en fonction de chaque charge sur essieu techniquement admissible de, par exemple, 13 et 7,5 tonnes, qu'il en résulte ainsi un rapport de charge sur essieu technique de 13 tonnes / 7,5 tonnes = 1,73, et **en ce que**, en outre, un dispositif de commutation automatique entre le rapport de charge sur essieu légale et le rapport de charge sur essieu technique est prévu, auquel cas la charge sur essieu légalement admissible du pont arrière (1) s'élève, par exemple, à 11,5 tonnes et la charge sur essieu légalement admissible de l'essieu traîné est de 11,5 tonnes / 1,73 = 6,65 tonnes et le dit dispositif présente les pièces suivantes, à savoir
- deux régulateurs proportionnels de pression (23, 24) commutables à chaque fois entre une position de passage total et un réducteur de pression - un pour chaque circuit de suspension pneumatique (3, 4) du pont arrière - les deux étant mis en position de réduction de pression pour atteindre un état de chargement qui correspond à une charge sur essieu techniquement admissible du pont arrière (1) de 11,5 tonnes, par exemple, et autorisant ainsi une réduction de la pression pneumatique de, par exemple, 7,5 bars à 6,5 bars dans les coussins pneumatiques du pont arrière (3/1, 3/2 ou 4/1, 4/2) selon le rapport indispensable de, par exemple, 1,15 en référence à la pression pneumatique de, par exemple, 7,5 bars dans les coussins pneumatiques (5/1, 6/1) de l'essieu poussé ou traîné, et
- un manocapteur (20) qui saisit la charge sur essieu du pont arrière (1) via la pression d'au moins l'un de ces deux circuits de suspension pneumatique (3, 4) et, lorsque la charge sur essieu légalement admissible est atteinte, qui déclenche la commutation des deux régulateurs proportionnels de pression (23, 24) dans la position de passage total de telle manière que le rapport de charge sur essieu technique se règle ensuite dans tous les coussins pneumatiques (3/1, 3/2, 4/1, 4/2, 5/1, 6/1) du pont arrière (1) et de l'essieu poussé ou traîné (2) en raison des mêmes pressions de 7,5 bars, par exemple.

2. Véhicule industriel selon la revendication 1, **caractérisé en ce que** chacun des deux régulateurs proportionnels de pression (23, 24)
- est monté dans un branchement de régulation d'air comprimé (3/4 ; 4/4) du circuit de suspension pneumatique gauche et droit (3, 4) qui passe entre un bloc d'électrovalves (9) et les deux coussins pneumatiques (3/1, 3/2 ou 4/1, 4/2) de chaque côté du pont arrière (1), et
- est commutable au moyen d'un signal pneumatique,
**en ce que** les deux régulateurs proportionnels de pression (23, 24) sont raccordés, par leurs entrées de commande, à la sortie (27) d'une valve de commande pneumatique (28) à chaque fois via une conduite de commande pneumatique (25, 26), la valve de commande pneumatique (28) pouvant être activée en cas de présence d'un signal initié par le manocapteur (20) si la charge sur essieu légalement admissible sur le pont arrière est atteinte et permettant ensuite l'amenée d'air de commande vers les deux régulateurs proportionnels de commande (23, 24) pour leur commutation synchrone en position de passage total dans laquelle il existe un raccord laissant passer l'air dans chaque branchement de régulation d'air comprimé (3/4 ou 4/4) du bloc d'électrovalves (9) vers chacun des deux coussins pneumatiques (3/1, 3/2 ou 4/1, 4/2) de chaque côté du pont arrière (1).

3. Véhicule industriel selon la revendication 2, **caractérisé en ce que** chaque régulateur proportionnel de pression (23, 24) présente un étranglement d'évacuation d'air (29 ou 30) visant à minimiser la consommation d'air comprimé dans la position de réduction de pression.

4. Véhicule industriel selon la revendication 2, **caractérisé en ce que** chaque régulateur proportionnel de pression (23, 24) est entouré d'un branchement de dérivation (31 ou 32) dans lequel une valve antiretour (33 ou 34) est montée et qui ne laisse passer l'air dans chaque branchement de régulation d'air comprimé (3/4 ; 4/4) qu'à partir des coussins pneumatiques (3/1, 3/2 ou 4/1, 4/2) raccordés à celle-ci du pont arrière (1) jusqu'au bloc d'électrovalves (9).

5. Véhicule industriel selon la revendication 1, **caractérisé en ce que** le manocapteur (20) est raccordé à la sortie commune (17) d'une valve à double coupure (12) dont les deux entrées (13, 14) sont en liaison avec le circuit de suspension pneumatique (3 et 4) gauche et droit du pont arrière (1) par le biais d'une conduite de raccordement (15, 16).

6. Véhicule industriel selon la revendication 2, **caractérisé en ce que**, dans ce cas, si l'essieu poussé ou traîné (2) est relevable et/ou les coussins pneumatiques (5/1, 6/1) de l'essieu poussé ou traîné (2) se trouvant en position porteuse abaissée peuvent être partiellement délestés au démarrage pour améliorer la traction du pont arrière (1) moteur par des ordres de commande correspondants venant de l'unité de commande électronique (8), un élément OU est prévu et présente trois entrées de signaux OU et une sortie (36), auquel cas
- la sortie (36) est reliée à l'organe de commande de la valve de commande d'air comprimé (28) via une conduite de commande (37),
- la première entrée de signaux OU est reliée au manocapteur (20) via une conduite de commande (38),
- la deuxième entrée de signaux OU est reliée à l'unité de commande (8) via une conduite de commande (39) signalisant la position relevée de l'essieu poussé ou traîné (2), et
- la troisième entrée de signaux OU est également reliée à l'unité de commande (8) via une conduite de commande (40) signalisant le délestage partielle des coussins pneumatiques (5/1, 6/1) de l'essieu poussé ou traîné (2) en cas de démarrage,
de telle manière que, en cas de présence d'un signal à l'une des trois entrées de signaux OU, la valve de commande d'air comprimé (28) obtient un signal, peut être actionnée par celui-ci et, ensuite, les régulateurs proportionnels de pression (23, 24) peuvent être commutées dans leur position de passage total.
